# EUROPEAN PATENT APPLICATION

(11) **EP 3 045 379 A1**
(43) Date of publication of application: **20.07.2016**
(21) Application number: 15151043.5
(22) Date of filing: 14.01.2015
(51) Int. Cl.: B62D 5/04

(54) **Method and system for limiting a maximum allowed turning of a vehicle wheel**

(71) Applicant: Volvo Car Corporation, 40531 Göteborg (SE)
(72) Inventor: DAHLGREN, David, 414 58 Göteborg (SE); BIVEBY, Richard, 44350 Lerum (SE); BRANDIN, Tobias, 44295 Hålta (SE); HANSSON, Anders, 42341 Torslanda (SE); JOHANSSON, Henrik, 44695 Älvängen (SE)
(74) Representative: Kraenzmer, Martin

(57) **Abstract**

The present disclosure relates to a method performed by a wheel turning limiting system (1) for limiting a maximum allowed turning of at least a first wheel (3) of a vehicle (2). The vehicle comprises a power steering system (4) comprising a motor (41) adapted to provide an assisting torque to assist in turning (5) of the at least first wheel. The wheel turning limiting system derives (1003) a first parameter (31) reflecting at least a first dimension of the at least first wheel (3). The wheel turning limiting system furthermore derives (1005) a pre-stored value (311) associated with the pre-stored dimension, which pre-stored value reflects a maximum allowed turning of the at least first wheel adequate for the at least first dimension. Moreover, the wheel turning limiting system controls (1006) the motor based on the pre-stored value, such that the turning of the at least first wheel is prevented from exceeding the maximum allowed turning.

The disclosure also relates to a wheel turning limiting system in accordance with the foregoing, and a vehicle comprising at least a portion of the wheel turning limiting system.

## Description

### TECHNICAL FIELD

The present disclosure relates to a wheel turning limiting system and a method performed therein for limiting a maximum allowed turning of at least a first wheel of a vehicle.

### BACKGROUND

As vehicles have become heavier, and tyre widths and tyre diameters have increased, the effort needed to turn the vehicle wheels about their steering axes has increased, often to the point where major physical exertion would be needed were it not for power assistance. To alleviate this, automakers have come to develop power steering systems - similarly known as power-assisted steering systems.

Electrical power steering (EPS) commonly utilizes an electric - or electronic - motor connected to a steering gear or steering column, to assist the vehicle driver. Sensors may detect the position and torque of the steering column, and an assisting torque may be applied via the motor to provide varying amounts of assistance depending on driving conditions.

Meanwhile, vehicle dynamics and physical dimensions of a vehicle, chassis, vehicle wheel, tyre and/or a wheel well adapted to house a vehicle wheel, may dictate restricting conditions as to what extent a vehicle wheel may be turned about its steering axis. Accordingly, an upper limit needs to be provided to ensure that wheel clearance is maintained in all driving situations. Such an upper limit may for instance be represented by a commonly known mechanical spacer, which may be positioned along the steering gear to limit steering travel of a rack bar. Varying restricting conditions as to what extent a vehicle wheel at the most may be turned require differentiated upper limits. Accordingly, a wide variety of mechanical spacers may be needed to cover different vehicle types, chassis, tyre dimensions etc. Subsequently, a wide variety of different steering gears may be needed, thus implying higher complexity of the steering gears and/or many variants thereof.

DE 10 2008 055 900, for instance, discloses a steering device for a vehicle. However, although DE 10 2008 055 900 enables electronically adjusting a maximum steering angle, the solution is based on incoming sensor signals, and is hence rather complex in that it requires a sensor comprising a navigation system.

### SUMMARY OF THE INVENTION

It is therefore an object of embodiments herein to provide a more efficient approach for enabling limiting of a maximum allowed turning of a vehicle wheel.

According to a first aspect of embodiments herein, the object is achieved by a method performed by a wheel turning limiting system for limiting a maximum allowed turning of at least a first wheel of a vehicle. The vehicle comprises a power steering system comprising a motor adapted to provide an assisting torque to assist in turning of the at least first wheel. The wheel turning limiting system derives a first parameter - e.g. a pre-stored first parameter - reflecting at least a first dimension of the at least first wheel. The wheel turning limiting system furthermore derives a pre-stored value associated with the first parameter, which pre-stored value reflects a maximum allowed turning of the at least first wheel adequate for the at least first dimension. Moreover, the wheel turning limiting system controls the motor based on the pre-stored value, such that the turning of the at least first wheel is prevented from exceeding the maximum allowed turning.

Thereby, an approach is provided which enables a maximum allowed turning of a vehicle wheel to be limited electronically, thus alleviating the need for differentiated mechanical spacers.

Furthermore, since the wheel turning limiting system derives a first parameter reflecting at least a first dimension of the at least first wheel, a e.g. pre-stored parameter holding information associated with one or more dimensions of the at least first wheel, such as a width of a tyre face of a tyre of the at least first wheel, a size of a sidewall of the tyre, and/or a rim diameter of a rim associated with the tyre, is available to the wheel turning limiting system.

Moreover, since the wheel turning limiting system furthermore derives a pre-stored value associated with the first parameter, which pre-stored value reflects a maximum allowed turning of the at least first wheel adequate for the at least first dimension, an in advance stored swivelling limit is available to the wheel limiting system.

Furthermore, since the wheel turning limiting system controls the motor based on the pre-stored value, such that the turning of the at least first wheel is prevented from exceeding the maximum allowed turning, the control of the motor is adapted taking into account the pre-stored value such that the at least first wheel is restricted from being swivelled about its e.g. steering axis beyond the maximum allowed turning stipulated by the pre-stored value. Thereby, the e.g. electric motor is controlled considering a maximum allowed turning adequate specifically for the at least first dimension of the at least first wheel; that is, control of the motor is adapted to the specific one or more dimensions of the at least first wheel in question, to maintain wheel clearance thereof. Accordingly, a flexible wheel turning limiting solution is provided, which enables a maximum swivelling of the at least first wheel to be adapted to specific dimensions thereof. Consequently, the introduced inventive solution may be implemented for endless combinations of different wheel dimensions, since the maximum allowed turning of the at least first wheel, rather than hardware-wise, is adapted software-wise to the one or more dimensions thereof.

For that reason, a more efficient approach is provided for enabling limiting of a maximum allowed turning of a vehicle wheel.

The technical features and corresponding advantages of the above mentioned method will be discussed in further detail in the following.

By introducing a method performed by a wheel turning limiting system for limiting a maximum allowed turning of at least a first wheel of a vehicle, an approach is provided which enables a vehicle road wheel to be restricted from being turned, e.g. swivelled about its steering axis, further than considered suitable. That is, e.g. vehicle dynamics and/or physical dimensions of the vehicle, chassis, vehicle wheel, tyre and/or a wheel well adapted to house the vehicle wheel, may dictate restricting conditions as to what extent, for instance up to which maximum angle, a wheel may be turned e.g. about its steering axis.

Accordingly, by providing an upper limit regarding to what extent a wheel at the most may be turned to maintain wheel clearance in all driving situations, hazardous situations and/or inappropriate excessive turning of the wheel may be avoided. The expression "turning of at least a first wheel" may refer to "swivelling of at least a first wheel" and/or "swivelling of at least a first wheel about its steering axis", whereas the expression "limiting a maximum allowed turning of" may refer to "maintaining wheel clearance for".

The word "wheel", which likewise may be referred to as "road wheel", may refer to any arbitrary wheel of a vehicle. Wheels may have varying characteristics and/or dimensions, and comprise tyres which in turn may have varying characteristics and/or dimensions; for instance varying tyre face widths, varying tyre sidewall sizes, varying tyre pressures, varying tread depth, varying manufacturers, varying models, and/or be designed to fit varying rim diameters. Said characteristics and/or dimensions affect to what extent a wheel at the most may be turned while still maintaining wheel clearance, which subsequently, in turn, affects a turning radius of the vehicle. Accordingly, a wheel of a first set of dimensions may be associated with a different maximum allowed turning, and subsequently a different turning radius, than a wheel of a second set of dimensions. For instance, a wheel comprising a tyre having a relatively narrow face width may be associated with a maximum allowed turning corresponding to a relatively tight turning radius as compared to a wheel comprising a tyre having a wider face width. Furthermore, the "vehicle" may comprise any arbitrary number of wheels, for instance four, and characteristics and/or dimensions of one wheel of the vehicle need not necessarily coincide with dimensions and/or characteristics of another wheel of said vehicle. Moreover, the word "vehicle" may refer to any arbitrary vehicle, such as car, truck, lorry, van, bus, motor cycle, scooter, tractor, golf cart or military vehicle. The vehicle may be provided with four-wheel drive, front-wheel drive and/or rear-wheel drive. Furthermore, the vehicle may moreover be an autonomous vehicle adapted for autonomous driving, i.e. a vehicle which, at least to some extent, may be driven without human interaction.

Moreover, the vehicle may be adapted to have online abilities, for instance by supporting Wifi functionality, or by being adapted to be in radio communication with a radio communications network, such as a cellular communications network, e.g. LTE, EDGE, CDMA, 4G, 3G, GPRS, or GSM, e.g. via an infotainment system of the vehicle, and/or via an optional mobile device on-board the vehicle.

The optional "mobile device" may, for instance, refer to a multi-functional smart phone, mobile phone, mobile terminal or wireless terminal, portable computer such as a laptop, PDA or tablet computer, surf plate such as an iPad, Pocket PC, and/or mobile navigation device. Moreover, the optional mobile device may be adapted to communicate with the vehicle, for instance with the infotainment system thereof, such that information and/or data may be transferred between the vehicle and the mobile device. Such communication may for instance be accomplished physically, such as via USB connection, and/or wirelessly, such as via Bluetooth, WiFi, or the like; additionally or alternatively, the connection may be accomplished via an intermediate system adapted to communicate with vehicles, for instance a management and/or assisting system such as e.g. Volvo On Call. Furthermore, the vehicle and/or the mobile device discussed above may be adapted to determine a speed of the vehicle, as commonly known in the art.

The wheel turning limiting system may, for instance, be at least partly comprised in the vehicle, for instance in one or more control units (CPUs) and/or nodes thereof. Additionally or alternatively, the wheel turning limiting system may, at least partly, be comprised in the optional mobile device discussed above, which mobile device may be taken on-board the vehicle. Moreover, additionally or alternatively, the wheel turning limiting system may be distributed, such that at least a portion of the wheel turning limiting system may be arranged remotely from the vehicle, for instance in one or more databases, and/or servers, which for instance may support cloud functionality and/or crowd sourcing.

Since the vehicle comprises a power steering system comprising a motor adapted to provide an assisting torque to assist in turning of the at least first wheel, steering assistance may be provided to swivel a steered road wheel about its axis as commonly known in the art. That is, as commonly known, e.g. sensors may detect a position and torque of e.g. a steering column of the vehicle, and assistive torque may be provided via the motor to either a steering gear of the power steering system or the steering column. Varying amount of assistance may then be provided by the motor depending on driving conditions; for instance, vary with speed of the vehicle, such that more assistance may be given at lower speeds. The power steering system, which likewise may be referred to as a power-assisted steering system, may refer to any arbitrary commonly known power steering system, such as an electric power steering system (EPS/EPAS). Correspondingly, the motor adapted to provide the assisting torque may refer to any arbitrary commonly known motor, such as an electric motor. Alternatively, the power steering system may refer to a system which to some extent comprises a commonly known hydraulic and/or hydraulic-electric system. The power steering system may furthermore, for instance, as commonly known, be mounted to, and/or be at least partly comprised in, a steering gear. Additionally or alternatively, the power steering system may, for instance, be mounted to, and/or be at least partly comprised in, a steering column. Moreover, the expression "motor adapted to provide an assisting torque" may refer to "motor configured and/or set out to apply additional torque", whereas "turning of the at least first wheel" may refer to "swivelling of the at least first wheel about its steering axis".

Since the wheel turning limiting system derives a first parameter - e.g. a pre-stored first parameter - reflecting at least a first dimension of the at least first wheel, the wheel turning limiting system derives an e.g. in advance stored information element representing one or more attributes associated with the at least first wheel, e.g. a tyre thereof. Thereby, a e.g. pre-stored parameter holding information associated with one or more dimensions of the at least first wheel, such as a width of a tyre face of a tyre of the at least first wheel, a size of a sidewall of the tyre, and/or a rim diameter of a rim associated with the tyre, is available to the wheel turning limiting system, for instance by being stored in one or more accessible memories. Such one or more accessible memories may be available on-board the vehicle, for instance comprised in one or more electronic control units such as e.g. a node holding information on vehicle configuration parameters, and the first parameter subsequently communicated to the wheel turning limiting system over a wired communications bus such as via e.g. CAN, FlexRay, MOST or the like, or wirelessly such as via e.g. Bluetooth, WiFi or the like. Additionally or alternatively, such one or more accessible memories may be available remote from the vehicle, for instance in one or more databases or servers, and the first parameter subsequently communicated to the wheel turning limiting system wirelessly such as via e.g. a cellular communications network. Furthermore, such one or more accessible memories may be comprised in the wheel turning limiting system itself.

The first parameter may be derived as often as considered appropriate for the situation at hand, for instance once every driving cycle, such as at start-up of the vehicle. "Deriving" may throughout this disclosure relate to "fetching", "reading", "receiving", "requesting", "identifying", "accessing" and/or "learning". Furthermore, "parameter" may throughout this disclosure likewise refer to "information element", whereas "dimension" likewise may refer to "character" and/or "attribute". Moreover, the first parameter "reflecting" at least a first dimension of the at least first wheel, may refer to the first parameter "indicating", "indirectly indicating", insinuating", "relating to", "corresponding to", "being associated with" and/or "representing" at least one or more dimensions of the at least first wheel.

According to an example, the expression "deriving a first parameter reflecting at least a first dimension of the at least first wheel", may comprise "deriving a first parameter indicating at least a width of a tyre face of a tyre of the at least first wheel; a size of a sidewall of a tyre of the at least first wheel; and/or a rim diameter of a rim associated with a tyre of the at least first wheel".

Since the wheel turning limiting system furthermore derives a pre-stored value associated with the first parameter, which pre-stored value reflects a maximum allowed turning of the at least first wheel adequate for the at least first dimension, the wheel turning limiting system e.g. identifies an in advance stored value specifically associated with the first parameter, which represents a swivelling limit of the at least first wheel - e.g. about its steering axis - considered appropriate for the at least first dimension. Thereby, a pre-stored value reflecting a maximum allowed turning of the at least first wheel adequate for the at least first dimension to maintain wheel clearance, is available to the wheel turning limiting system, for instance by being stored in one or more memories thereof. The pre-stored value may for instance be stored in a data table, matrix, set or the like, where it may be associated with a pre-stored element corresponding to, and/or coinciding with, the first parameter. Such a e.g. data table may accordingly comprise a plurality of e.g. dimension elements representing different potential wheel dimensions, which are associated with respective values reflecting respective maximum allowed wheel turning adequate for respective wheel dimensions to maintain wheel clearance.

Accordingly, by confronting the e.g. data table, a match of the first parameter reflecting the at least first dimension of the at least first wheel, may be found among the e.g. dimension elements, and subsequently, the associated pre-stored value revealing the maximum allowed turning of the at least first wheel adequate specifically for the at least first dimension in question, may be derived. The e.g. dimension elements may, for instance, comprise numbers, letter, signs etc., to which the first parameter may be matched.

The pre-stored value may be derived as often as considered appropriate for the situation at hand, for instance continuously, intermittently, on request and/or once every driving cycle, such as at start-up of the vehicle. The word "value" may refer to one or more of a "measure", "property", "number" and/or "threshold", whereas "adequate for" throughout this disclosure may refer to "considered adequate for", "suitable for", "restricted by" and/or "limited by". Moreover, the pre-stored value "reflecting" a maximum allowed turning, may refer to the pre-stored value "indicating", "indirectly indicating", insinuating", "relating to", "corresponding to", "being associated with" and/or "representing" a swivelling limit.

Since the wheel turning limiting system controls the motor based on the pre-stored value, such that the turning of the at least first wheel is prevented from exceeding the maximum allowed turning, the control of the motor is adapted taking into account the pre-stored value such that the at least first wheel is restricted from being swivelled e.g. about its steering axis beyond the maximum allowed turning stipulated by the pre-stored value. Thereby, the e.g. electric motor is controlled considering a maximum allowed turning adequate specifically for the at least first dimension of the at least first wheel; that is, control of the motor is adapted to the specific one or more dimensions of the at least first wheel in question, to maintain wheel clearance thereof. Accordingly, a flexible wheel turning limiting solution is provided, which - based on deriving a first parameter reflecting one or more dimensions of the at least first wheel, deriving a matching pre-stored value reflecting an adequate maximum allowed turning, and controlling the motor considering the pre-stored value such that the maximum allowed turning is not exceeded - enables a maximum swivelling of the at least first wheel to be adapted to specific dimensions thereof. Consequently, since a wheel of a first dimension may be associated with a maximum allowed turning which differs from that of a wheel of a second dimension, control of the motor for the wheel of the first dimension may accordingly differ from control of the motor for the wheel of the second dimension.

Thus, the introduced inventive solution may be implemented for endless combinations of different wheel dimensions, since the maximum allowed turning of the at least first wheel rather than hardware-wise, is adapted software-wise, to the one or more dimensions thereof.

The word "controlling" may refer to "adapting control of ", "running" and/or "driving", whereas the expression "based on" may refer to "associated with", "taking into account", "utilizing" and/or "considering". Moreover, the word "prevented" may refer to "prevented software-wise", whereas the word "exceeding" may refer to "being turned beyond" and/ or "being turned further than".

According to an example, "controlling the motor based on the pre-stored value, such that the turning of the at least first wheel is prevented from exceeding the maximum allowed turning", may comprise "controlling said motor by adapting the assisting torque based on the pre-stored value, such that the turning of the at least first wheel is prevented from exceeding the maximum allowed turning". Thereby, by adapting the assisting torque taking into consideration the pre-stored value, the motor may be controlled such that the at least first wheel is prevented from exceeding the maximum allowed turning.

According to an embodiment, the wheel turning limiting system may decrease the assisting torque and/or provide a counteracting torque, when the turning of the at least first wheel approaches the maximum allowed turning. Thereby, should the turning of the at least first wheel come near the maximum allowed turning stipulated by the pre-stored value, the assisting torque is adapted to provide less assistance, and/or a counteracting torque is provided, thus preventing the at least first wheel from being turned beyond the stipulated maximum allowed turning. The motor may for instance be controlled such that the assisting torque is decreased when the turning of the at least first tyre - for instance initiated by a driver via the steering wheel - approaches the maximum allowed turning; the nearer to the maximum allowed turning, the more decreased the assisting torque until the turning of the at least first wheel is close enough to the maximum allowed turning to rather initiate a counteracting torque. The expression "counteracting torque" may refer to a torque provided by the motor to counteract turning of the at least first wheel, whereas "approaches" may refer to "comes relatively near or close", "is relatively near or close to", "is in the vicinity of" and/or "reaches a pre-determined percentage of".

Such a pre-determined percentage may, for instance, refer to 75%, 85% and/or 95%, of the maximum allowed turning.

According to another embodiment, the motor may be adapted to control a rack bar of a steering gear of the power steering system, which rack bar is adapted to be mechanically directly or indirectly linked with the at least first wheel such that the turning of the at least first wheel is based on change of steering travel of the rack bar. The pre-stored value then indicates a maximum allowed steering travel of the rack bar, which maximum allowed steering travel corresponds to the maximum allowed turning of the at least first wheel. Moreover, the wheel turning limiting system then controls the motor based on the pre-stored value, such that the steering travel is prevented from exceeding the maximum allowed steering travel. Thereby, since the pre-stored value indicates a maximum allowed steering travel of the rack bar corresponding to the maximum allowed turning of the at least first wheel, the first parameter reflecting the at least first dimension of the at least first wheel is associated with the maximum allowed steering travel adequate for said at least first dimension. Moreover, since the motor is controlled based on the pre-stored value, and subsequently based on the maximum allowed steering travel stipulated by the pre-stored value, the motor is controlled such that the steering travel of the rack bar is prevented from exceeding the maximum allowed steering travel. That is, the motor is controlled such that the steering travel is limited to the maximum allowed steering travel.

The "steering gear" may refer to any arbitrary steering gear commonly known in the art, and correspondingly, the "rack bar" may refer to any arbitrary rack bar known in the art. Consequently, a rack bar "adapted to be mechanically directly or indirectly linked with the at least first wheel such that the turning of the at least first wheel is based on change of steering travel of the rack bar", may be implemented as commonly known in the art. The turning of the at least first wheel being "based on change" of steering travel of the rack bar, may refer to the turning of the at least first wheel being "affected by movement "of steering travel of the rack bar. Moreover, the maximum allowed steering travel "corresponds to" the maximum allowed turning of the at least first wheel, may refer to the maximum allowed steering travel "is proportional to", "reflects", "represents", and/or "is associated with" the maximum allowed turning of the at least first wheel. The word "indicates" may in this context refer to "comprises", "relates to", "refers to" and/or "represents".

According to yet another embodiment, the wheel turning limiting system may further derive a vehicle speed parameter reflecting a current speed of the vehicle. The wheel turning limiting system then derives a pre-stored value additionally associated with the vehicle speed parameter, wherein the pre-stored value reflects a maximum allowed turning of the at least first wheel adequate for the at least first dimension at the current vehicle speed. Thereby, since a vehicle speed parameter is accessed, the wheel turning limiting system identifies a current vehicle speed. Moreover, since the wheel turning limiting system identifies a pre-stored value which, additionally to being associated with the first parameter, is associated with the vehicle speed parameter, the pre-stored value reflects a maximum allowed turning of the at least first wheel adequate not only for the at least first dimension, but additionally adequate at the current vehicle speed. Accordingly, for the one and same at least first dimension of the at least first wheel, the pre-stored value associated therewith, and subsequently the maximum allowed turning stipulated by the pre-stored value, may vary along with the vehicle speed. Thus, at relatively low vehicle speeds, where less dynamic wheel movements enable maintained wheel clearance at greater turning of the wheel, a greater maximum allowed turning may be implemented. Consequently, for instance during low speed parking, by implementing a greater maximum allowed turning, a tighter turning radius may be accomplished. The vehicle speed parameter may be derived as often as considered appropriate for the situation at hand, for instance continuously, intermittently, and/or on request. Subsequently, by correspondingly deriving the pre-stored value continuously, intermittently, and/or on request, the maximum allowed turning of the at least first wheel, may be adapted to the current vehicle speed.

The pre-stored value may for instance be stored in a data table, matrix, set or the like, where it, in addition to being associated with a pre-stored element corresponding to, and/or coinciding with, the first parameter, may be associated with a pre-stored element corresponding to, and/or coinciding with, the vehicle speed parameter. Such a e.g. data table may accordingly, in addition to comprising a plurality of e.g. dimension elements representing different potential wheel dimensions, comprise a plurality of e.g. vehicle speed elements, which may be associated with respective values reflecting respective maximum allowed wheel turning adequate for respective wheel dimensions and respective vehicle speeds to maintain wheel clearance.

Accordingly, by confronting the e.g. data table, in addition to finding a match of the first parameter among the e.g. dimension elements, a match of the vehicle speed parameter may be found among the e.g. vehicle speed elements. Subsequently, the associated pre-stored value revealing the maximum allowed turning of the at least first wheel adequate specifically for the at least first dimension and current vehicle speed in question, may be derived. The e.g. vehicle speed elements may, for instance, comprise numbers, letters, and/or signs etc. and/or specify ranges, to which the vehicle speed parameter may be matched.

The vehicle speed may be determined as commonly known in the art, and the vehicle speed parameter may hence be derived in any known manner. That is, the vehicle speed parameter may, for instance, be stored in one or more accessible memories. Such one or more accessible memories may be available on-board the vehicle, for instance comprised in one or more electronic control units such as e.g. a main node, and the vehicle speed parameter subsequently communicated to the wheel turning limiting system over a wired communications bus such as via e.g. CAN, FlexRay, MOST or the like, or wirelessly such as via e.g. Bluetooth, WiFi or the like. Furthermore, such one or more accessible memories may be comprised in the wheel turning limiting system itself.

The vehicle speed parameter "reflecting" a current speed of the vehicle, may refer to the vehicle speed parameter "comprising", "indicating", "indirectly indicating", insinuating", "relating to", "corresponding to", "being associated with" and/or "representing" a current speed of the vehicle. Moreover, the expression "current speed" may refer to "essentially current speed".

According to an example, the expression "deriving a vehicle speed parameter reflecting a current speed of the vehicle", may comprise "determining a current vehicle speed of the vehicle and deriving a vehicle speed parameter reflecting the current vehicle speed".

According to still another embodiment, the wheel turning limiting system may additionally derive a pre-stored vehicle type parameter which reflects a vehicle type of the vehicle. The vehicle type is associated with one or more wheel well dimensions of a wheel well of the vehicle adapted to house the at least first wheel.

The wheel turning limiting system then further derives a pre-stored value additionally associated with the pre-stored vehicle type parameter, whereby the pre-stored value reflects a maximum allowed turning of the at least first wheel adequate for the at least first dimension and for the vehicle type. Thereby, since the wheel turning limiting system, in addition to deriving the first parameter reflecting the at least first dimension of the at least first wheel, derives a pre-stored vehicle type parameter which reflects a vehicle type of the vehicle, one or more wheel well dimensions of a wheel well of the vehicle adapted to house the at least first wheel may be taken into consideration. Moreover, since the wheel turning limiting system derives a pre-stored value which, in addition to being associated with the first parameter, is associated with the pre-stored vehicle type parameter, the derived pre-stored value reflects a maximum allowed turning of the at least first wheel adequate not merely for the at least first dimension, but additionally for the vehicle type stipulated by the vehicle type parameter. Accordingly, for the one and same at least first dimension of the at least first wheel, the pre-stored value associated therewith, and subsequently the maximum allowed turning stipulated by the pre-stored value, may vary along with the vehicle type, and subsequently vary along with one or more wheel well dimensions of a wheel well of the vehicle adapted to house the at least first wheel. Thus, for a first vehicle type enabling maintained wheel clearance at greater turning of the wheel than a second vehicle type, a greater maximum allowed turning may be implemented. Consequently, for instance for a vehicle type providing generous wheel well dimensions, by implementing a greater maximum allowed turning, a tighter turning radius may be accomplished.

The pre-stored value may for instance be stored in a data table, matrix, set or the like, where it, in addition to being associated with a pre-stored element corresponding to, and/or coinciding with, the first parameter, may be associated with a pre-stored element corresponding to, and/or coinciding with, the vehicle type. Such a e.g. data table may accordingly, in addition to comprising a plurality of e.g. dimension elements representing different potential wheel dimensions, comprise a plurality of e.g. vehicle type elements, which may be associated with respective values reflecting respective maximum allowed wheel turning adequate for respective wheel dimensions and respective vehicle type to maintain wheel clearance. Accordingly, by confronting the e.g. data table, in addition to finding a match of the first parameter among the e.g. dimension elements, a match of the vehicle type parameter may be found among the e.g. vehicle type elements. Subsequently, the associated pre-stored value revealing the maximum allowed turning of the at least first wheel adequate specifically for the at least first dimension and vehicle type in question, may be derived. The e.g. vehicle type elements may, for instance, comprise numbers, letter, and/or signs etc., to which the pre-stored vehicle type parameter may be matched.

The pre-stored vehicle type parameter is available to the wheel turning limiting system for instance by being stored in one or more accessible memories. Such one or more accessible memories may be available on-board the vehicle, for instance comprised in one or more electronic control units such as e.g. a node holding information on vehicle configuration parameters, and the vehicle type parameter subsequently communicated to the wheel turning limiting system over a wired communications bus such as via e.g. CAN, FlexRay, MOST or the like, or wirelessly such as via e.g. Bluetooth, WiFi or the like. Additionally or alternatively, such one or more accessible memories may be available remote from the vehicle, for instance in one or more databases or servers, and the vehicle type parameter subsequently communicated to the wheel turning limiting system wirelessly such as via e.g. a cellular communications network. Furthermore, such one or more accessible memories may be comprised in the wheel turning limiting system itself.

The pre-stored vehicle type parameter may derived as often as considered appropriate for the situation at hand, for instance once every driving cycle, such as at start-up of the vehicle, or merely once. Moreover, the pre-stored vehicle type parameter "reflecting" a vehicle type of the vehicle, may refer to the pre-stored vehicle type parameter "comprising", "indicating", "indirectly indicating", insinuating", "relating to", "corresponding to", "being associated with" and/or "representing" the vehicle type of the vehicle. The "vehicle type" may, for instance, refer to a "chassis type". Moreover, the vehicle type being "associated with" one or more wheel well dimensions, may refer to the vehicle type "representing" and/or "providing" one or more wheel well dimensions. Moreover, "wheel well dimensions" may refer to dimensions of a wheel well, wheel housing, and/or wheel arch, whereas "adapted to house the at least first wheel" may refer to "in which the at least first wheel is adapted to be mounted".

According to one embodiment, the wheel turning limiting system may further determine, for a plurality of different potential wheel dimensions, a respective adequate value reflecting a maximum allowed turning of the at least first wheel. The wheel turning limiting system then furthermore stores the respective adequate value to be associated with the corresponding potential wheel dimension. Thereby, since a respective adequate value reflecting a maximum allowed turning is established for a plurality of varying potential wheel dimensions, the wheel turning limiting system may provide a mapping of different potential wheel dimensions with respective adequate values considered appropriate for the corresponding wheel dimensions. Moreover, since the respective adequate value is stored to be associated with the corresponding potential wheel dimension(s), for instance in one or more memories, for instance during production and/or during maintenance of the vehicle, the mapping of the different potential wheel dimensions and the corresponding respective adequate values may be available to, and subsequently derivable by, the wheel turning limiting system, e.g. at a later stage, and may thus be considered to be "pre-stored".

The wheel turning limiting system may, for instance, store the different potential wheel dimensions to be associated with the corresponding adequate values, in a previously discussed data table, matrix, set or the like. Such a e.g. data table may accordingly comprise a plurality of e.g. dimension elements representing different potential wheel dimensions, associated with respective values, e.g. value elements, reflecting respective maximum allowed wheel turning adequate for respective wheel dimensions to maintain wheel clearance.

Additionally, the wheel turning limiting system may further determine, for a plurality of different potential vehicle types, a respective adequate value reflecting a maximum allowed turning of the at least first wheel. The wheel turning limiting system then furthermore stores the respective adequate value to be associated with the corresponding potential vehicle type.

Thereby, since a respective adequate value reflecting a maximum allowed turning is established not only for a plurality of varying potential wheel dimensions, but additionally for a plurality of varying potential vehicle types, the wheel turning limiting system may provide a mapping of different potential wheel dimensions with different potential vehicle types, and subsequently with respective adequate values considered appropriate for the corresponding wheel dimensions and corresponding vehicle types. Moreover, since the respective adequate value, in addition to being stored associated with the corresponding potential wheel dimension(s), is stored to be associated with the corresponding potential vehicle type, for instance in one or more memories, for instance during production and/or during maintenance of the vehicle, the mapping of the different potential wheel dimensions, different potential vehicle types and the corresponding respective adequate values may be available to, and subsequently derivable by, the wheel turning limiting system, e.g. at a later stage, and may thus be considered to be "pre-stored".

The wheel turning limiting system may, for instance, store the different potential vehicle types to, in addition to being associated with potential wheel dimensions, be associated with the corresponding adequate values, in a previously discussed data table, matrix, set or the like. Such a e.g. data table may accordingly, in addition to comprising a plurality of e.g. dimension elements representing different potential wheel dimensions, comprise a plurality of e.g. vehicle type elements representing different potential vehicle types, all of which may be associated with respective values, e.g. value elements, reflecting respective maximum allowed wheel turning adequate for respective wheel dimensions and respective vehicle type to maintain wheel clearance.

Storing the respective adequate value to "be associated with" the corresponding potential wheel dimension and/or the corresponding potential vehicle type, may refer to storing the respective adequate value to "be linked with" and/or to "be reference to" the corresponding potential wheel dimension and/or the corresponding potential vehicle type. Furthermore, "determining" may in this context refer to "mapping", "identifying" and/or "establishing". Moreover, "a plurality of different potential wheel dimensions" may refer to "more than one potential wheel dimension", whereas "a plurality of different potential vehicle types" may refer to "more than one potential vehicle type". "Adequate value" may throughout this disclosure refer to "suitable value", "determined value" and/or "matching value".

Moreover, an adequate value "reflecting" a maximum allowed turning, may throughout this disclosure refer to an adequate value "indicating", "indirectly indicating", insinuating", "relating to", "corresponding to", "being associated with", "representing" and/or "comprising" a maximum allowed turning, for instance a maximum allowed steering travel.

According to a further embodiment, the wheel turning limiting system may further determine, for the plurality of different potential wheel dimensions, for at least two different potential vehicle speeds, a respective adequate value reflecting a maximum allowed turning of the at least first wheel at respective potential vehicle speed. The wheel turning limiting system then furthermore stores the respective adequate value to be associated with the corresponding potential wheel dimension and with the corresponding potential vehicle speed. Thereby, since a respective adequate value reflecting a maximum allowed turning is established not only for a plurality of varying potential wheel dimensions, but additionally for at least two different potential vehicle speeds, the wheel turning limiting system may provide a mapping of different potential wheel dimensions with different potential vehicle speeds, and subsequently with respective adequate values considered appropriate for the corresponding wheel dimensions and corresponding vehicle speeds. Moreover, since the respective adequate value, in addition to being stored associated with the corresponding potential wheel dimension(s), is stored to be associated with the corresponding potential vehicle speed, for instance in one or more memories, for instance during production and/or during maintenance of the vehicle, the mapping of the different potential wheel dimensions, different potential vehicle speeds and the corresponding respective adequate values may be available to, and subsequently derivable by, the wheel turning limiting system, e.g. at a later stage, and may thus be considered to be "pre-stored".

The wheel turning limiting system may, for instance, store the at least two potential vehicle speeds to, in addition to being associated with potential wheel dimensions, be associated with the corresponding adequate values, in a previously discussed data table, matrix, set or the like. Such a e.g. data table may accordingly, in addition to comprising a plurality of e.g. dimension elements representing different potential wheel dimensions, comprise a plurality of e.g. vehicle speed elements representing different potential vehicle speeds, all of which may be associated with respective values reflecting respective maximum allowed wheel turning adequate for respective wheel dimensions and respective vehicle speeds to maintain wheel clearance.

Storing the respective adequate value to "be associated with" the corresponding potential wheel dimension and with the corresponding potential vehicle speed, may refer to storing the respective adequate value to "be linked with" and/or to "be reference to" the corresponding potential wheel dimension and the corresponding potential vehicle speed. Moreover, "at least two different potential vehicle speeds" may refer to "a plurality of different potential vehicle speeds"

According to a second aspect of embodiments herein, the object is achieved by a wheel turning limiting system for limiting a maximum allowed turning of at least a first wheel of a vehicle. The vehicle comprises a power steering system comprising a motor adapted to provide an assisting torque to assist in turning of the at least first wheel. The wheel turning limiting system comprises a dimension deriving unit adapted for deriving a first parameter - e.g. a pre-stored first parameter - reflecting at least a first dimension of the at least first wheel. The wheel turning limiting system furthermore comprises a value deriving unit adapted for deriving a pre-stored value associated with the first parameter, which pre-stored value reflects a maximum allowed turning of the at least first wheel adequate for the at least first dimension. Moreover, the wheel turning limiting system comprises a controlling unit adapted for controlling the motor based on the pre-stored value, such that the turning of the at least first wheel is prevented from exceeding the maximum allowed turning.

According to an embodiment, the motor may be adapted to control a rack bar of a steering gear of the power steering system, which rack bar is adapted to be mechanically directly or indirectly linked with the at least first wheel such that the turning of the at least first wheel is based on change of steering travel of the rack bar. The pre-stored value then indicates a maximum allowed steering travel of the rack bar, which maximum allowed steering travel corresponds to the maximum allowed turning of the at least first wheel. Moreover, the controlling unit is then adapted for controlling the motor based on the pre-stored value, such that the steering travel is prevented from exceeding the maximum allowed steering travel.

According to another embodiment, the controlling unit may further be adapted for decreasing the assisting torque and/or providing a counteracting torque, when the turning of the at least first wheel approaches the maximum allowed turning.

According to yet another embodiment, the wheel turning limiting system may comprise a speed deriving unit adapted for deriving a vehicle speed parameter reflecting a current speed of the vehicle. The value deriving unit is then further adapted for deriving a pre-stored value additionally associated with the vehicle speed parameter, wherein the pre-stored value reflects a maximum allowed turning of the at least first wheel adequate for the at least first dimension at the current vehicle speed.

According to still another embodiment, the dimension deriving unit may further be adapted for deriving a pre-stored vehicle type parameter which reflects a vehicle type of the vehicle. The vehicle type is associated with one or more wheel well dimensions of a wheel well of the vehicle adapted to house the at least first wheel. The value deriving unit is then further adapted for deriving a pre-stored value additionally associated with the pre-stored vehicle type parameter, wherein the pre-stored value reflects a maximum allowed turning of the at least first wheel adequate for the at least first dimension and for the vehicle type.

According to one embodiment, the wheel turning limiting system may further comprise a values determining unit adapted for determining, for a plurality of different potential wheel dimensions, a respective adequate value reflecting a maximum allowed turning of the at least first wheel. The wheel turning limiting system then furthermore comprises a storing unit adapted for storing the respective adequate value to be associated with the corresponding potential wheel dimension.

Additionally or alternatively, the values determining unit may be adapted for determining, for a plurality of different potential vehicle types, a respective adequate value reflecting a maximum allowed turning of the at least first wheel. The storing unit is then adapted for storing the respective adequate value to be associated with the corresponding potential vehicle type.

According to a further embodiment, the values determining unit may further be adapted for determining, for the plurality of different potential wheel dimensions, for at least two different potential vehicle speeds, a respective adequate value reflecting a maximum allowed turning of the at least first wheel at respective potential vehicle speed.

The storing unit is then further adapted for storing the respective adequate value to be associated with the corresponding potential wheel dimension and with the corresponding potential vehicle speed.

Similar advantages as those mentioned in the foregoing in relation to the first aspect correspondingly apply to the second aspect, why these advantages are not further discussed.

According to a third aspect of embodiments herein, the object is achieved by a vehicle comprising at least a first wheel, a power steering system comprising a motor adapted to provide an assisting torque to assist in turning of the at least first wheel, and at least a portion of the wheel turning limiting system discussed above.

Once more, similar advantages as those mentioned in the foregoing in relation to the first aspect correspondingly apply to the third aspect, why these advantages are not further discussed.

According to a fourth aspect of embodiments herein, the object is achieved by a computer program product comprising a computer program containing computer program code means arranged to cause a computer or a processor to execute the steps of the wheel turning limiting system discussed above, stored on a computer-readable medium or a carrier wave. Yet again, similar advantages as those mentioned in the foregoing in relation to the first aspect correspondingly apply to the fourth aspect, why these advantages are not further discussed.

It should be appreciated that the introduced methods in the wheel turning limiting system may require the vehicle, the power steering system and/or the motor, to be in a respective "ON" state.

### BRIEF DESCRIPTION OF THE DRAWINGS

The various aspects of the non-limiting embodiments of the invention, including particular features and advantages, will be readily understood from the following detailed description and the accompanying drawings, in which:
**Figure 1** illustrates a schematic overview of an exemplifying wheel turning limiting system according to embodiments of the disclosure;
**Figure 2** illustrates a schematic overview of an exemplifying optional values data table according to embodiments of the disclosure;
**Figure 3** is a schematic block diagram illustrating an exemplifying wheel turning limiting system according to embodiments of the disclosure; and
**Figure 4** is a flowchart depicting an exemplifying method performed by a wheel turning limiting system according to embodiments of the disclosure.

### DETAILED DESCRIPTION

The non-limiting embodiments of the present disclosure will now be described more fully hereinafter with reference to the accompanying drawings, in which currently preferred embodiments of the disclosure are shown. This disclosure may, however, be embodied in many different forms and should not be construed as limited to the embodiments set forth herein. Like reference characters refer to like elements throughout. Dashed lines of some boxes in the figures indicate that these units or actions are optional and not mandatory.

In the following, according to embodiments herein which relate to limiting a maximum allowed turning of at least a first wheel of a vehicle, there will be disclosed that the inventive concept enables the maximum allowed turning of the vehicle wheel to be limited electronically.

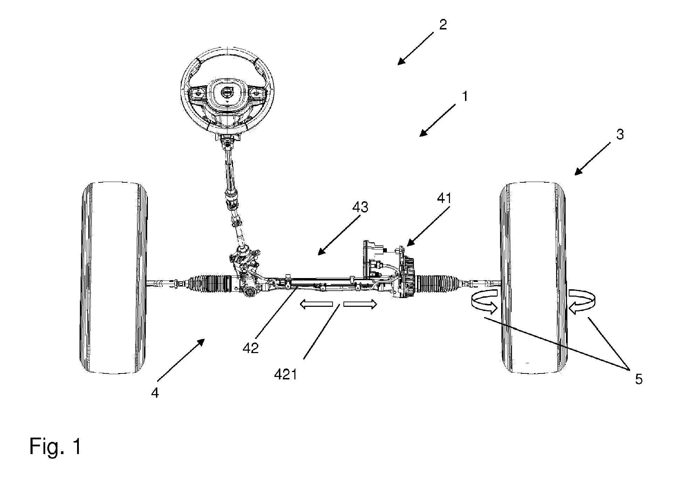

Referring now to the figures and **Figure 1** in particular, there is depicted a schematic overview of an exemplifying **wheel turning limiting system 1** according to embodiments of the disclosure. The wheel turning limiting system 1, which will be described in further detail later on in this description, may at least partly be comprised in a **vehicle 2**; here a merely partly depicted passenger car. The vehicle 2 comprises at least a first **wheel 3**, and a **power steering system 4** comprising a **motor 41** adapted to provide an assisting torque to assist in **turning 5** of the at least first wheel 3, for instance about its steering axis, e.g. in a plane coinciding with the ground surface. The power steering system 4 is here an electrical power steering (EPS) system, and the motor 41 is here an electric motor. The motor 41 is in the shown embodiment adapted to control a **rack bar 42** of a **steering gear 43** of the power steering system 4, which rack bar 42 is adapted to be mechanically directly or indirectly linked with the at least first wheel 3 such that the turning 5 of the at least first wheel 3 is based on change of **steering travel 421** of the rack bar 42, as known in the art.

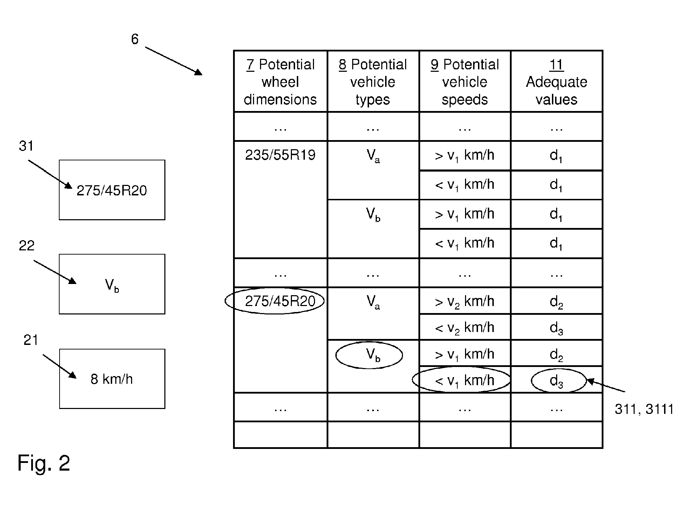

**Figure 2** illustrates a schematic overview of an exemplifying optional **values data table 6** according to embodiments of the disclosure. The values data table 6, or a similar arbitrarily arranged data table, matrix and/or set, may be arbitrarily stored in memory, for instance a memory of the wheel turning limiting system 1. The optional values data table 6 here comprises elements representing a plurality of different **potential wheel dimensions 7**, a plurality of different **potential vehicle types 8**, and/or at least two different **potential vehicle speeds 9**. The dimension elements 7 are here represented by combinations of numbers, letter and signs indicating dimensions associated with different potential tyres, namely exemplifying 235/55R19 and 275/45R20. Correspondingly, the vehicle type elements 8 are here represented by combinations of letters indicating different vehicle types, namely exemplifying Vₐ and V_{b}. In a similar manner, the vehicle speed elements 9, which may indicate vehicle speed ranges, are here represented by combinations of numbers, letters and signs, namely > v₁ km/h, < v₁ km/h, > v₂ km/h, and < v₂ km/h, which for instance may represent values ranging from 2-200 km/h.

The optional values data table 6 may furthermore comprise elements representing a plurality of **adequate values 11** reflecting maximum allowed turning of the at least first wheel 3 adequate for respective potential wheel dimensions 7. The adequate value elements 11, which may be represented by maximum steering travel values, are here represented by combinations of letter, namely d₁, d₂ and d₃, which for instance may represent values ranging from 10-500 mm. Respective adequate values 11, such as respective adequate value elements 11, may be stored associated with corresponding potential wheel dimensions 7, such as respective dimension elements 11. Optionally, respective adequate values 11 are stored additionally associated with corresponding potential vehicle types 8, such as respective vehicle type elements 8, thus reflecting maximum allowed turning of the at least first wheel 3 adequate for respective potential vehicle types 8. Moreover, respective adequate values 11 may be stored additionally associated with corresponding potential vehicle speeds 9, such as respective vehicle speed elements 9, thus reflecting maximum allowed turning of the at least first wheel 3 adequate for respective potential vehicle speed 9.

Also illustrated in Figure 2 is a **first parameter 31 - here pre-stored -** reflecting at least a first dimension of the at least first wheel 3. The pre-stored first parameter 31 is here represented by 275/45R20. Figure 2 further depicts an optional **pre-stored vehicle type parameter 22** which reflects a vehicle type of the vehicle 2. The vehicle type is associated with one or more wheel well dimensions of a wheel well of the vehicle 2 adapted to house the at least first wheel 3. The pre-stored vehicle type parameter 22 is here represented by V_{b}. Moreover illustrated in Figure 2 is an optional **vehicle speed parameter 21** reflecting a current speed of the vehicle 2. The vehicle speed parameter 21 is here represented by 8 km/h, which is an exemplifying speed below v₁ km/h.

Figure 2 further depicts a **pre-stored value 311** associated with the first parameter 31, which pre-stored value 311 reflects a maximum allowed turning of the at least first wheel 3 adequate for the at least first dimension. The pre-stored value 311 is here represented by d₃. In the shown embodiment, the pre-stored value 311 indicates a **maximum allowed steering travel 3111** of the rack bar 42, which maximum allowed steering travel 3111 corresponds to the maximum allowed turning of the at least first wheel 3.

Optionally, the pre-stored value 311 is additionally associated with the vehicle speed parameter 21, wherein the pre-stored value 311 reflects a maximum allowed turning of the at least first wheel 3 adequate for the at least first dimension at the current vehicle speed. Moreover, optionally, the pre-stored value 311 is additionally associated with the vehicle type parameter 22, wherein the pre-stored value 311 reflects a maximum allowed turning of the at least first wheel 3 adequate for the at least first dimension and for the vehicle type.

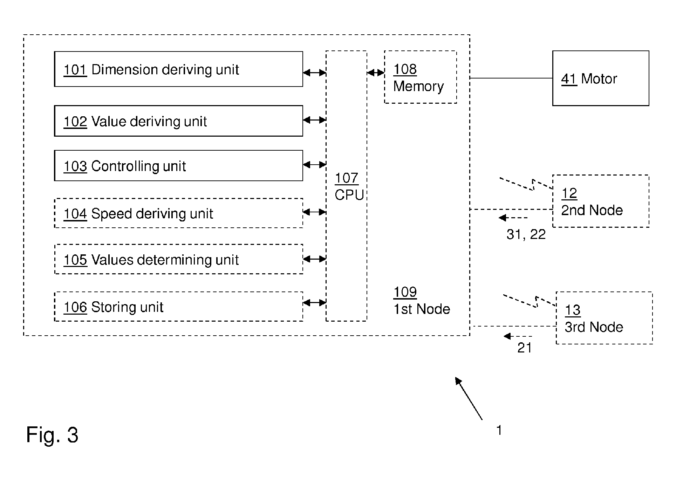

As further shown in **Figure 3**, which is a schematic block diagram illustrating an exemplifying wheel turning limiting system 1 according to embodiments of the disclosure, the wheel turning limiting system 1 is, as previously mentioned in conjunction with Figures 1-2, adapted for limiting a maximum allowed turning of at least a first wheel 3 of a vehicle 2, which vehicle 2 comprises a power steering system 4 comprising a motor 41 adapted to provide an assisting torque to assist in turning 5 of the at least first wheel 3. The wheel turning limiting system 1 comprises a **dimension deriving unit 101,** a **value deriving unit 102** and a **controlling unit 103,** all of which will be described in further detail below. Moreover, the wheel turning limiting system 1 may further comprise an optional **speed deriving unit 104,** an optional **values determining unit 105** and/or an optional **storing unit 106,** which in a similar manner will be described in further detail later on in this description.

Furthermore, the embodiments herein for limiting a maximum allowed turning of at least a first wheel 3 of a vehicle 2, may be implemented through one or more processors, such as a **processor 107**, here denoted CPU, together with computer program code for performing the functions and actions of the embodiments herein. Said program code may also be provided as a computer program product, for instance in the form of a data carrier carrying computer program code for performing the embodiments herein when being loaded into the wheel turning limiting system 1. One such carrier may be in the form of a CD ROM disc. It is however feasible with other data carriers such as a memory stick. The computer program code may furthermore be provided as pure program code on a server and downloaded to the wheel turning limiting system 1.

The wheel turning limiting system 1 may further comprise a **memory 108** comprising one or more memory units. The memory 108 may be arranged to be used to store e.g. information, and further to store data, configurations, schedulings, and applications, and for instance the first parameter 31, the pre-stored value 311, the maximum allowed steering travel 3111, the vehicle speed parameter 21, the vehicle type parameter 22, potential wheel dimensions 7, potential vehicle types 8, adequate values 11, vehicle speeds 9 etc., to perform the methods herein when being executed in the wheel turning limiting system 1.

Furthermore, the dimension deriving unit 101, the value deriving unit 102, the controlling unit 103, the optional speed deriving unit 104, the optional values determining unit 105, the optional storing unit 106, the optional processor 107 and/or the optional memory 108, may for instance be implemented in one or several arbitrary node, such as a **first node 109**, arranged locally on-board the vehicle 2, i.e. comprised in the vehicle 2 and/or in a previously discussed mobile device e.g. adapted to be utilized on-board the vehicle, and/or at least partly implemented remotely therefrom such as in one or more databases and/or servers, which may support e.g. cloud functionality and/or crowd sourcing. A node 109 may be an electronic control unit (ECU) or any suitable generic electronic device, and may involve, for instance, a power steering node or a main central node. The disposition of the functionality between e.g. the node(s) 109 and e.g. remotely arranged databases and/or servers may be arbitrary selected as considered suitable. According to an alternative example, the nodes 109 may, as a complement to being represented by e.g. one or several integrated ECUs, be represented by a plug-in solution, for instance a dongle. In that manner, an aftermarket solution may be provided to any arbitrary vehicle suitable.

Those skilled in the art will also appreciate that the dimension deriving unit 101, the value deriving unit 102, the controlling unit 103, the optional speed deriving unit 104, the optional values determining unit 105, and/or the optional storing unit 106, may refer to a combination of analog and digital circuits, and/or one or more processors configured with software and/or firmware, e.g. stored in a memory such as the memory 108, that when executed by the one or more processors such as the processor 107 perform as will be described in more detail below.

One or more of these processors, as well as the other digital hardware, may be included in a single ASIC (Application-Specific Integrated Circuitry), or several processors and various digital hardware may be distributed among several separate components, whether individually packaged or assembled into a SoC (System-on-a-Chip).

Further shown in Figure 3 is an optional **second node 12,** from which the first first parameter 31 and/or the pre-stored vehicle type parameter 22 may be derived, and an optional **third node 13,** from which the vehicle speed parameter 21 may be derived.

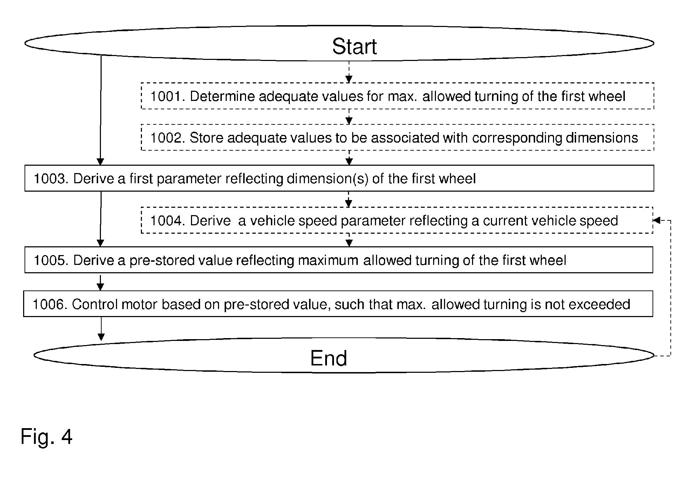

**Figure 4** is a flowchart depicting an exemplifying method performed by a wheel turning limiting system 1 according to embodiments of the disclosure. The method in the wheel turning limiting system 1 is, as previously indicated, for limiting a maximum allowed turning of at least a first wheel 3 of a vehicle 2, which vehicle 2 comprises a power steering system 4 comprising a motor 41 adapted to provide an assisting torque to assist in turning 5 of the at least first wheel 3.

The exemplifying method, which may be continuously repeated, comprises the following actions discussed with support from Figures 1-3. The actions may be taken in any suitable order, and/or one or more actions may even be performed simultaneously where applicable. For instance, Actions 1003 and 1004 may be performed essentially simultaneously, and/or in an alternate order.

### Action 1001

In optional Action 1001, the wheel turning limiting system 1 may determine, for instance map, e.g. by means of the values determining unit 105, for a plurality of different potential wheel dimensions 7, a respective adequate value 11 reflecting a maximum allowed turning of the at least first wheel 3. Correspondingly, the values determining unit 105 may be adapted for determining, for instance mapping, for a plurality of different potential wheel dimensions 7, a respective adequate value 11 reflecting a maximum allowed turning of the at least first wheel 3.

Additionally or alternatively, the wheel turning limiting system 1 may determine, for instance map, e.g. by means of the values determining unit 105, for a plurality of different potential vehicle types 8, a respective adequate value 11 reflecting a maximum allowed turning of the at least first wheel 3.

Correspondingly, the values determining unit 105 may be adapted for determining, for instance mapping, for a plurality of different potential vehicle types 8, a respective adequate value 11 reflecting a maximum allowed turning of the at least first wheel 3.

Optionally, the wheel turning limiting system 1 may determine, e.g. map, e.g. by means of the values determining unit 105, for the plurality of different potential wheel dimensions 7, for at least two different potential vehicle speeds 9, a respective adequate value 11 reflecting a maximum allowed turning of the at least first wheel 3 at respective potential vehicle speed 9. Correspondingly, the values determining unit 105 may further be adapted for determining, for instance mapping, for the plurality of different potential wheel dimensions 7, for at least two different potential vehicle speeds 9, a respective adequate value 11 reflecting a maximum allowed turning of the at least first wheel 3 at respective potential vehicle speed 9.

Thereby, the wheel turning limiting system 1 may provide a mapping of different potential wheel dimensions 7, different potential vehicle types 8 and/or different potential vehicle speeds 9 with respective adequate values 11 considered appropriate.

### Action 1002

In optional Action 1002, the wheel turning limiting system 1 may store, e.g. by means of the storing unit 106, the respective adequate value 11 to be associated with the corresponding potential wheel dimension 7. Correspondingly, the storing unit 106 may be adapted for storing the respective adequate value 11 to be associated with the corresponding potential wheel dimension 7.

Additionally or alternatively, the wheel turning limiting system 1 may store, e.g. by means of the storing unit 106, the respective adequate value 11 to additionally be associated with the corresponding potential vehicle type 8. Correspondingly, the storing unit 106 may be adapted for storing the respective adequate value 11 to additionally be associated with the corresponding potential vehicle type 8.

Optionally, the wheel turning limiting system 1 may store, e.g. by means of the storing unit 106, the respective adequate value 11 to be associated with the corresponding potential wheel dimension 7 and with the corresponding potential vehicle speed 9. Correspondingly, the storing unit 106 may further be adapted for storing the respective adequate value 11 to be associated with the corresponding potential wheel dimension 7 and with the corresponding potential vehicle speed 9.

Thereby, the mapping of the different potential wheel dimensions 7, different potential vehicle types 8 and/or different potential vehicle speeds 9 with the corresponding respective adequate values may be available to, and subsequently derivable by, the wheel turning limiting system 1, e.g. at a later stage, and may thus be considered to be "pre-stored".

### Action 1003

In Action 1003, the wheel turning limiting system 1 derives, e.g. by means of the dimension deriving unit 101, a first first parameter 31 reflecting at least a first dimension of the at least first wheel 3. Correspondingly, the dimension deriving unit 101 is adapted for deriving a first first parameter 31 reflecting at least a first dimension of the at least first wheel 3.

Optionally, the wheel turning limiting system 1 may additionally derive, e.g. by means of the dimension deriving unit 101, a pre-stored vehicle type parameter 22 reflecting a vehicle type of the vehicle 2. Correspondingly, the dimension deriving unit may further be adapted for deriving a pre-stored vehicle type parameter 22 reflecting a vehicle type of the vehicle 2. The vehicle type is associated with one or more wheel well dimensions of a wheel well of the vehicle 2 adapted to house the at least first wheel 3.

### Action 1004

In optional Action 1004, the wheel turning limiting system 1 may derive, e.g. by means of the speed deriving unit 104, a vehicle speed parameter 21 reflecting a current speed of the vehicle 2. Correspondingly, the speed deriving unit 104 may be adapted for deriving a vehicle speed parameter 21 reflecting a current speed of the vehicle 2.

### Action 1005

In Action 1005, the wheel turning limiting system 1 derives, e.g. by means of the value deriving unit 102, a pre-stored value 311 associated with the at least first dimension of the at least first wheel 3. Correspondingly, the values deriving unit 102 is adapted for deriving a pre-stored value 311 associated with the at least first dimension of the at least first wheel 3. The pre-stored value 311 reflects a maximum allowed turning of the at least first wheel 3 adequate for the at least first dimension.

Should the motor 41 be adapted to control the rack bar 42 of the steering gear 43 of the power steering system 4, which rack bar 42 is adapted to be mechanically directly or indirectly linked with the at least first wheel 3 such that the turning 5 of the at least first wheel 3 is based on change of steering travel 421 of the rack bar 42, then the pre-stored value 311 may indicate a maximum allowed steering travel 3111 of the rack bar 42. The maximum allowed steering travel 3111 corresponds to the maximum allowed turning of the at least first wheel 3.

Optionally, the wheel turning limiting system 1 may derive, e.g. by means of the value deriving unit 102, a pre-stored value 311 additionally associated with the vehicle type parameter 22. Correspondingly, the value deriving unit 102 may further be adapted for deriving a pre-stored value 311 additionally associated with the vehicle type parameter 22. The pre-stored value 311 then reflects a maximum allowed turning of the at least first wheel 3 adequate for the at least first dimension and for the vehicle type.

Moreover, optionally, following optional Action 1004 of deriving a vehicle speed parameter 21, the wheel turning limiting system 1 may derive, e.g. by means of the value deriving unit 102, a pre-stored value 311 additionally associated with the vehicle speed parameter 21. Correspondingly, the value deriving unit 102 may further be adapted for deriving a pre-stored value 311 additionally associated with the vehicle speed parameter 21. The pre-stored value 311 reflects a maximum allowed turning of the at least first wheel 3 adequate for the at least first dimension at the current vehicle speed.

### Action 1006

In Action 1006, the wheel turning limiting system 1 controls, e.g. by means of the controlling unit 103, the motor 41 based on the pre-stored value 311, such that the turning 5 of the at least first wheel 3 is prevented from exceeding the maximum allowed turning. Correspondingly, the controlling unit is adapted for controlling the motor 41 based on the pre-stored value 311, such that the turning 5 of the at least first wheel 3 is prevented from exceeding the maximum allowed turning.

Optionally, should the pre-stored value 311 indicate a maximum allowed steering travel 3111 of the rack bar 42, then the wheel turning limiting system 1 may further control the motor 41 based on the pre-stored value 311, e.g. by means of the controlling unit 103, such that the steering travel 421 is prevented from exceeding the maximum allowed steering travel 3111. Correspondingly, the controlling unit 103 may then further be adapted for controlling the motor 41 based on the pre-stored value 311, such that the steering travel 421 is prevented from exceeding the maximum allowed steering travel 3111.

Moreover, optionally, the wheel turning limiting system 1 may further, e.g. by means of the controlling unit 103, decrease the assisting torque and/or provide a counteracting torque, when the turning 5 of the at least first wheel 3 approaches the maximum allowed turning, e.g. when the steering travel 421 approaches the maximum allowed steering travel 3111. Correspondingly, the controlling unit 103 may further be adapted for decreasing the assisting torque and/or providing a counteracting torque, when the turning 5 of the at least first wheel 3 approaches the maximum allowed turning, e.g. when the steering travel 421 approaches the maximum allowed steering travel 3111.

Thereby, as shown in the foregoing, an approach has been introduced according to which the e.g. electric motor 41 is controlled considering a maximum allowed turning adequate specifically for the at least first dimension of the at least first wheel 3; that is, control of the motor 41 is adapted to the specific one or more dimensions of the at least first wheel 3 in question, to maintain wheel clearance thereof.

Accordingly, a flexible wheel turning limiting solution has been shown, which - based on deriving 1003 a first parameter 31 reflecting one or more dimensions of the at least first wheel 3, deriving 1005 a matching pre-stored value 311 reflecting an adequate maximum allowed turning, and controlling 1006 the motor considering the pre-stored value 311 such that the maximum allowed turning is not exceeded - enables a maximum swivelling of the at least first wheel 3 to be adapted to specific dimensions thereof.

The person skilled in the art realizes that the present disclosure by no means is limited to the preferred embodiments described above. On the contrary, many modifications and variations are possible within the scope of the appended claims. For example, a method or a wheel turning limiting system described herein may be used for limiting a maximum allowed turning of one or more wheels of one or more vehicles. For instance, a single wheel turning limiting system may be used for limiting a maximum allowed turning of a plurality of wheels of a plurality of vehicles. Additionally, even though the claims are directed to a wheel turning limiting system suitable for limiting a maximum allowed turning of at least a first wheel of a vehicle and a method performed therein, such a system and method may be used for any application in which a maximum allowed turning of a turnable object is to be limited. For example the system or method described herein may be used to limit the maximum allowed turning of any turnable object in a vehicle, not only a wheel thereof. It should furthermore be noted that the drawings not necessarily are to scale and the dimensions of certain features may have been exaggerated for the sake of clarity. Emphasis is instead placed upon illustrating the principle of the embodiments herein. Additionally, in the claims, the word "comprising" does not exclude other elements or steps, and the indefinite article "a" or "an" does not exclude a plurality.

## Claims

1. A method performed by a wheel turning limiting system (1) for limiting a maximum allowed turning of at least a first wheel (3) of a vehicle (2), said vehicle (2) comprising a power steering system (4) comprising a motor (41) adapted to provide an assisting torque to assist in turning (5) of said at least first wheel (3), said method comprising:
***deriving*** (1003) a first parameter (31) reflecting at least a first dimension of said at least first wheel (3);
***deriving*** (1005) a pre-stored value (311) associated with said first parameter (31), said pre-stored value (311) reflecting a maximum allowed turning of said at least first wheel (3) adequate for said at least first dimension; and
***controlling*** (1006) said motor (41) based on said pre-stored value (311), such that said turning (5) of the at least first wheel (3) is prevented from exceeding said maximum allowed turning.

2. The method according to claim 1, wherein said motor (41) is adapted to control a rack bar (42) of a steering gear (43) of said power steering system (4), which rack bar (42) is adapted to be mechanically directly or indirectly linked with said at least first wheel (3) such that said turning (5) of the at least first wheel (3) is based on change of steering travel (421) of said rack bar (42);
wherein said pre-stored value (311) indicates a maximum allowed steering travel (3111) of said rack bar (42), which maximum allowed steering travel (3111) corresponds to said maximum allowed turning of the at least first wheel (3); and
wherein said *controlling* (1006) comprises controlling said motor (41) based on said pre-stored value (311), such that said steering travel (421) is prevented from exceeding said maximum allowed steering travel (3111).

3. The method according to claim 1 or 2, wherein said *controlling* (1006) the motor (41) based on said pre-stored value (311), comprises decreasing said assisting torque and/or providing a counteracting torque, when said turning (5) of the at least first wheel (3) approaches said maximum allowed turning.

4. The method according to any one of claims 1-3, further comprising:
***deriving*** (1004) a vehicle speed parameter (21) reflecting a current speed of said vehicle (2);
wherein said *deriving* (1005) a pre-stored value (311) further comprises:
deriving a pre-stored value (311) additionally associated with said vehicle speed parameter (21), said pre-stored value (311) reflecting a maximum allowed turning of said at least first wheel (3) adequate for said at least first dimension at said current vehicle speed.

5. The method according to any one of claims 1-4, wherein said *deriving* (1003) a first parameter (31) further comprises additionally deriving a pre-stored vehicle type parameter (22) reflecting a vehicle type of said vehicle (2), said vehicle type being associated with one or more wheel well dimensions of a wheel well of said vehicle (2) adapted to house said at least first wheel (3);
wherein said *deriving* (1005) a pre-stored value (311) further comprises:
deriving a pre-stored value (311) additionally associated with said pre-stored vehicle type parameter (22), said pre-stored value (311) reflecting a maximum allowed turning of said at least first wheel (3) adequate for said at least first dimension and for said vehicle type.

6. The method according to any one of claims 1-5, further comprising:
***determining*** (1001), for a plurality of different potential wheel dimensions (7), and/or for a plurality of different potential vehicle types (8), a respective adequate value (11) reflecting a maximum allowed turning of said at least first wheel (3); and
***storing*** (1002) the respective adequate value (11) to be associated with the corresponding potential wheel dimension (7) and/or the corresponding potential vehicle type (8).

7. The method according to claim 6, wherein said *determining* (1001) a respective adequate value (11) further comprises:
determining, for said plurality of different potential wheel dimensions (7), for at least two different potential vehicle speeds (9), a respective adequate value (11) reflecting a maximum allowed turning of said at least first wheel (3) at respective potential vehicle speed (9); and
wherein said *storing* (1002) comprises:
storing the respective adequate value (11) to be associated with the corresponding potential wheel dimension (7) and with the corresponding potential vehicle speed (9).

8. A **wheel turning limiting system** (1) for limiting a maximum allowed turning of at least a first wheel (3) of a vehicle (2), said vehicle (2) comprising a power steering system (4) comprising a motor (41) adapted to provide an assisting torque to assist in turning (5) of said at least first wheel (3), said wheel turning limiting system (1) comprising:
a **dimension deriving unit** (101) adapted for *deriving* (1003) a first parameter (31) reflecting at least a first dimension of said at least first wheel (3);
a **value deriving unit** (102) adapted for *deriving* (1005) a pre-stored value (311) associated with said first parameter (31), said pre-stored value (311) reflecting a maximum allowed turning of said at least first wheel (3) adequate for said at least first dimension; and
a **controlling unit** (103) adapted for *controlling* (1006) said motor (41) based on said pre-stored value (311), such that said turning (5) of the at least first wheel (3) is prevented from exceeding said maximum allowed turning.

9. The wheel turning limiting system (1) according to claim 8, wherein said motor (41) is adapted to control a rack bar (42) of a steering gear (43) of said power steering system (4), which rack bar (42) is adapted to be mechanically directly or indirectly linked with said at least first wheel (3) such that said turning (5) of the at least first wheel (3) is based on change of steering travel (421) of said rack bar (42);
wherein said pre-stored value (311) indicates a maximum allowed steering travel (3111) of said rack bar (42), which maximum allowed steering travel (3111) corresponds to said maximum allowed turning of the at least first wheel (3); and
wherein said controlling unit (103) is adapted for controlling said motor (41) based on said pre-stored value (311), such that said steering travel (421) is prevented from exceeding said maximum allowed steering travel (3111).

10. The wheel turning limiting system (1) according to claim 8 or 9, wherein said controlling unit (103) further is adapted for decreasing said assisting torque and/or providing a counteracting torque, when said turning (5) of the at least first wheel (3) approaches said maximum allowed turning.

11. The wheel turning limiting system (1) according to any one of claims 8-10, further comprising:
a **speed deriving unit** (104) adapted for *deriving* (1004) a vehicle speed parameter (21) reflecting a current speed of said vehicle (2);
wherein said **value deriving unit** (102) further is adapted for:
deriving a pre-stored value (311) additionally associated with said vehicle speed parameter (21), said pre-stored value (311) reflecting a maximum allowed turning of said at least first wheel (3) adequate for said at least first dimension at said current vehicle speed.

12. The wheel turning limiting system (1) according to any one of claims 8-11, wherein said dimension deriving unit (101) further is adapted for deriving a pre-stored vehicle type parameter (22) reflecting a vehicle type of said vehicle (2), said vehicle type being associated with one or more wheel well dimensions of a wheel well of said vehicle (2) adapted to house said at least first wheel (3);
wherein said value deriving unit (102) further is adapted for:
deriving a pre-stored value (311) additionally associated with said pre-stored vehicle type parameter (22), said pre-stored value (311) reflecting a maximum allowed turning of said at least first wheel (3) adequate for said at least first dimension and for said vehicle type.

13. The wheel turning limiting system (1) according to any one of claims 8-12, further comprising:
a **values determining unit** (105) adapted for *determining* (1001), for a plurality of different potential wheel dimensions (7), and/or for a plurality of different potential vehicle types (8), a respective adequate value (11) reflecting a maximum allowed turning of said at least first wheel (3); and
a **storing unit** (106) adapted for *storing* (1002) the respective adequate value (11) to be associated with the corresponding potential wheel dimension (7) and/or the corresponding potential vehicle type (8).

14. The wheel turning limiting system (1) according to claim 13, wherein said values determining unit (105) further is adapted for:
determining, for said plurality of different potential wheel dimensions (7), for at least two different potential vehicle speeds (9), a respective adequate value (11) reflecting a maximum allowed turning of said at least first wheel (3) at respective potential vehicle speed (9); and
wherein said storing unit (106) further is adapted for:
storing the respective adequate value (11) to be associated with the corresponding potential wheel dimension (7) and with the corresponding potential vehicle speed (9).

15. A vehicle (2) comprising:
at least a first wheel (3);
a power steering system (4) comprising a motor (41) adapted to provide an assisting torque to assist in turning (5) of said at least first wheel (3); and
at least a portion of a wheel turning limiting system (1) according to any one of claims 8-14.
